# EUROPEAN PATENT SPECIFICATION

(11) **EP 2 179 075 B1**
(45) Date of publication and mention of the grant of the patent: **30.09.2015**
(21) Application number: 08786673.7
(22) Date of filing: 31.07.2008
(51) Int. Cl.: C23F 11/00, C02F 5/10, C02F 1/68, C02F 103/02

(54) **INHIBITION OF CORROSION IN BOILERS BY POLYHYDROXY BENZENE ADDITION**
KORROSIONSINHIBIERUNG IN HEIZKESSELN DURCH ZUSATZ VON POLYHYDROXYBENZOL
INHIBITION DE LA CORROSION DANS DES CHAUDIÈRES PAR ADDITION DE POLYHYDROXYBENZÈNE

(30) Priority: 14.08.2007 GB 0715788
(43) Date of publication of application: 28.04.2010
(73) Proprietor: BASF SE, 67056 Ludwigshafen (DE)
(72) Inventor: MCCANN, Andrew, Bradford West Yorkshire BD10 9QQ (GB); HOOLEY, Anne Frances, Wakefield West Yorkshire WF2 0LZ (GB); FOVET, Yannick, F-92700 France (FR); SINGH, Michael, Leeds West Yorkshire LS28 7TT (GB); COLLIER, Simon Andrew, Halifax West Yorkshire HX1 3AN (GB); HUGHES, Jonathan, Huddersfield West Yorkshire HD2 2HE (GB)
(74) Representative: Peatfield, Jeremy William
(86) International application number: PCT/EP2008/060048
(87) International publication number: WO 2009/021852

(56) References cited:
- GB-A- 802 060
- JP-A- 2001 181 869
- US-A- 4 895 703
- US-A- 4 929 364
- US-A- 4 968 438

## Description

The present invention relates to a method of inhibiting corrosion in boiler water circuits. This method enables more rapid reduction of dissolved oxygen in the feed water, which in turn reduces corrosion.

It is known that dissolved oxygen causes corrosion in boiler water circuits and that this is exacerbated at elevated temperatures. Typically, oxygen is removed from the system by a combination of physical de-aeration, usually mechanical de-aeration, and the addition of water treatment chemicals. Sodium sulphite is a common and useful commodity oxygen scavenger but it tends to break down at high pressure and form hydrogen sulphide and sulphur dioxide which are very corrosive. Hydrazine has traditionally been an attractive alternative oxygen scavenger but in recent years concerns have been raised that hydrazine is a carcinogen. Consequently, this is led to the search for alternative oxygen scavengers.

3,4,5-Trihydroxybenzoic acid (gallic acid) and 1,2,3-trihydroxybenzene (pyrogallol) have both been identified as oxygen scavengers although their use is not widespread.

JP-A-57021912 describes a stabilised aqueous composition comprising deoxidising agent by combining aromatic compound having 3 or more hydroxyl groups, e.g. pyrogallol or gallic acid with an alkali metal sulphite.

JP-A-61157343 concerns an oxygen absorbent and claims to provide improved absorbing speed and capacity that avoids generating noxious gases. The product combines pyrogallol, an alkaline compound, activated carbon and a moisture imparting compound. Typically, the alkaline compound can be any of an alkali metal or alkaline earth metal of a hydroxide or carbonate. The moisture imparting compound can be NaH₂PO₄.12H₂O or Na₂CO₃.10H₂O. The activated carbon is said to be coarse. The composition is said to be useful as a preservative for foods or as an oxidation inhibitor for a drug.

GB-A-2138796 describes a process for improving the initial activity of activated hydrazine for the prevention of corrosion in boiler feedwater and for the wet preservation of idle plant. The initial activity of hydrazine solutions are activated using complexes of trivalent cobalt and this activity is increased by adding trivalent phenols, preferably pyrogallol.

EP-A-215655 and US-A- 4895703 refer to a method of inhibiting corrosion in boilers and boiler feedwater systems by adding to boiler feedwater that contains oxygen at least one trihydroxybenzene compound. A second corrosion inhibitor may also be added, for instance hydroquinone, morpholine, diethyl ethanolamine etc.

US-A-4929364 reveals an aqueous concentrate useful for treating boiler water in order to scavenge oxygen containing either gallic acid or propyl gallate. The concentrate has a pH adjusted to at least 8.5 by a water-soluble neutralising amine.

US-A-4968438 discloses an improved method for scavenging dissolved oxygen from waters used to generate steam comprising gallic acid.

EP-A-343712 defines a method for inhibiting metal corrosion of caustic evaporators comprising a caustic solution in an aqueous system, said method comprising adding to the water of said system a formulation which comprises hydroquinone and pyrogallol at 0.5-1.5 ppm and 0.055-0.165 ppm, respectively. JP-A-2000009734 describes using a deoxygenation method in order to prevent the deterioration of a colouring reagent in a liquid chromatograph. An oxygen absorbent is used such as reduced iron powder, reduced copper powder, alkali solution of pyrogallol and an aqueous solution of dithionite.

WO-2004 097071 describes an oxygen scavenger useful as a hydrazine substitute that includes a heterocyclic compound having an N-substituted amino group which may be used in combination with a polyhydric phenol catalyst such as pyrogallol. The composition may be useful for reduction of oxygen in boiler water.

US-A-2006 163534 concerns an oxygen absorbing composition containing an oxidisable organic composition that is carried on a solid carrier. The oxidisable organic composition includes any of several compounds including gallic acid or pyrogallol.

In some cases the use of pyrogallol supplied to cooling water circuits provides very good oxygen removal and corrosion inhibition. However, this cannot always be achieved consistently. In addition, since pyrogallol is a very reactive substance its supply also involves additional handling issues.

It is also known that pyrogallol can be prepared by subjecting gallic acid to high-temperatures. Chinese patent publication 1680239 describes that anhydrous gallic acid is mixed with pyridine and refluxed to produce pyrogallol. Chinese patent publication 1733671 teaches that gallic acid can be sublimed at 220°C to 280°C using a unity coupling heating system and is decarboxylated. Chinese patent publication 1453262 describes that the decarboxylation of gallic acid in a vacuum over a period of 16 hours. Polish patent 87534 describes the thermal decarboxylation of gallic acid in the presence of formamide or its N-alkyl derivative. Soviet patent 105427 refers to the decarboxylation of gallic acid in the presence of a tertiary amine. In GB 144897 aromatic acids are said to heated with a neutral metallic salt and one example describes the preparation of pyrogallol from gallic acid using this method. Similarly US 4895703 describes preparing pyrogallol by heating gallic acid or tannin with an amount of a metallic compound.

The objective of the present invention is to find a method in which oxygen present in boiler feedwater can be removed more efficiently and more consistently so as to improve upon the inhibition of corrosion.

According to the present invention we provide a method of inhibiting corrosion in a boiler water circuit comprising adding to boiler feedwater containing oxygen an effective amount of a composition comprising 1,2,3-trihydroxybenzene and feeding this into the boiler water circuit,
in which the 1,2,3-trihydroxybenzene is generated by subjecting a solution, comprising the corresponding 3,4,5-trihydroxybenzoic acid and a base, to an agent in order to convert at least a portion of the 3,4,5-trihydroxybenzoic acid to said 1,2,3-trihvdroxvbenzene,
wherein the 1,2,3-trihydroxybenzene is formed substantially immediately before it is fed into the feed water tank or the boiler water circuit, where the agent is heat and the amount of heat is sufficient to raise the temperature of the solution of the 3,4,5-trihydroxybenzoic acid to at least 10°C.

Unexpectedly, we have found that this method consistently provides a much more rapid removal of oxygen from the boiler feedwater than a composition supplied using either a polyhydric benzoic acid, such as gallic acid, or a polyhydric benzene, such as pyrogallol. It would seem that the in situ formation of pyrogallol consistently provides a composition which removes oxygen more rapidly in the feed water and thereby enhances corrosion inhibition in the boiler water circuit.

In general the composition containing the 1,2,3-trihydroxybenzene is combined with the feed water which is then fed into the boiler water circuit. By substantially immediately fed into the feed water tank or boiler water circuit, we mean that upon conversion of the 3,4,5-trihydroxybenzoic acid to the requisite amount of the corresponding 1,2,3-trihydroxybenzene the composition is generally fed straight into the feed water tank and/or boiler water circuit. Generally, this will be within ten minutes and usually between two seconds and five minutes. Typically, this will be within ten seconds and five minutes.

In general, substantially all of the 3,4,5-trihydroxybenzoic acid is converted to the 1,2,3-trihydroxybenzene. Normally this will be at least 50% by weight of the 3,4,5-trihydroxybenzoic acid, and preferably at least 75%, more preferably at least 90% and in particular at least 95%, especially at least 99% and more preferably substantially 100%.

The energy will be heat. The amount of heat delivered will be sufficient to convert the 3,4,5-trihydroxybenzoic acid into 1,2,3-trihydroxybenzene. In general, it is usually convenient to define the amount of heat in terms of the resulting temperature of the solution of 3,4,5-trihydroxybenzoic acid. Preferably, the amount of heat will be sufficient to raise the temperature of the solution of 3,4,5-trihydroxybenzoic acid to at least 100°C and more preferably at least 120°C. The temperature may be as high as 250°C, but is not normally higher than 230°C. A particularly suitable temperature will be in the range of between 120 and 200°C, for instance between 130 and 185°C.

In general it may be necessary to contact the solution of 3,4,5-trihydroxybenzoic acid with the agent for an effective length of time sufficient to convert at least some and preferably substantially all of the 3,4,5-trihydroxybenzoic acid to 1,2,3-trihydroxybenzene. It may be desirable to adjust the period time according to the temperature of the solution. The amount of time will usually be greater than a few seconds, for instance greater than 50 seconds, and normally greater than one or two minutes, for instance at least 5 minutes. The period may be up to 30 minutes or 45 minutes or longer. This period may be as long as 90 minutes or longer but in general will not be longer than 60 minutes.

We have found that the presence of the base in the solution with 3,4,5-trihydroxybenzoic acid neutralises the carbonic acid that may form in the process of decarboxylation of the polyhydric benzoic acid.

The base which is used in combination with the solution of 3,4,5-trihydroxybenzoic acid may be any substance capable of neutralising 3,4,5-trihydroxybenzoic acid. In general, sufficient of the base is added in order to ensure that the solution has a pH of greater than 7, usually greater than 8 and preferably at least 8.5. The pH may be raised to as high as 9 or 10 or higher, for instance 12 or 14. Typically, the base can be any alkali metal oxide or hydroxide, alkaline earth metal oxide or hydroxide, an amine or ammonia. The ammonia may be applied as ammonia gas or more preferably as ammonium hydroxide. Preferably, the base is selected from the group consisting of an amine, ammonia and alkali metal hydroxide. Preferably, the alkali metal hydroxide can be selected from any of potassium hydroxide, sodium hydroxide, lithium hydroxide or rubidium hydroxide. The amine can be a primary, secondary or tertiary amine or alternatively can be a quaternary ammonium compound.

Desirable amines include dimethyl amino ethanol, diethyl amino ethanol, morpholine, cyclohexylamine, dimethyl isopropanol amine, mono ethanolamine, methoxy propylamine, methyl amine, dimethylamine, trimethylamine, ethylamine, diethylamine, triethylamine, pyrrolidine and piperidine.

One convenient method of effecting the conversion of 3,4,5-trihydroxybenzoic acid to 1,2,3-trihydroxybenzene is to feed a solution comprising 3,4,5-trihydroxybenzoic acid and base into a unit in which the solution is brought into contact with the agent. Desirably the unit may be a vessel containing a chamber in which the reaction occurs, an inlet through which the solution of 3,4,5-trihydroxybenzoic acid is introduced, and an outlet through which the composition containing 1,2,3-trihydroxybenzene is allowed to flow from the unit.

The unit may be constructed in such a way that the solution containing the 3,4,5-trihydroxybenzoic acid enters and then subjected to the agent for a sufficient period of time to allow conversion to the 1,2,3-trihydroxybenzene. Upon conversion to the 1,2,3-trihydroxybenzene the resulting composition can then be removed through the outlet. This may be achieved by applying pressure to the composition in the unit with the inlet closed and the outlet open, thereby forcing the contents of the unit to flow through the outlet. Such pressure may include forcing an inert gas into the chamber. Alternatively, the composition containing the polyhydric benzene may be removed by a suitable pumping mechanism or it may be desirable to position the outlet at the base or lower end of the unit such that the contents of the unit can be removed by gravity.

The resulting composition containing the 1,2,3-trihydroxybenzene can be removed from the chamber of the unit, for instance as mentioned previously, and flowed into the boiler water circuit.

Suitable means in the unit should be provided for contacting the solution of 3,4,5-trihydroxybenzoic acid with the agent.

As the agent is heat, this can be achieved by placing a suitable for the source within the chamber of the unit or alternatively by providing a heating source externally such that it conducts through the wall of the chamber. Suitably the chamber will contain a temperature sensor which enables the heat source to be controlled to provide the optimal temperature required.

In accordance with the present invention there are a number of possibilities for contacting the solution of 5,4,5-trihydroxvbenzoic acid with a heating source, as the agent. It is especially preferred to use a heating source that will raise the temperature of the solution of 3,4,5-trihydroxybenzoic acid to temperature of at least 120°C. Suitable heating sources are selected from the group consisting of waste boiler heat, exhaust gases, electrical heating element, waste steam, process steam, microwave heating source and any combinations thereof. One alternative heating source is an electrical heating element, for instance an electrical trace heating tape. It may be desirable to use an electrical trace heating tape, or similar means, in combination with the aforementioned unit used to convert the solution of 3,4,5-trihydroxybenzoic acid to the composition containing the 1,2,3-trihydroxybenzene. Furthermore, it may be desirable to employ the electrical trace heating tape in combination with other heating sources. The electrical trace heating tape may for instance be useful for sustaining the temperature of the 1,2,3-trihydroxybenzene reaction medium. We have found that the use of an electrical trace heating tape facilitates raising the temperature of the solution of 3,4,5-trihydroxybenzoic acid to appropriate temperature to effect the conversion to the 1,2,3-trihydroxybenzene.

In another preferred embodiment trace heating tape is wrapped around a pipe constructed of stainless steel. This pipe would be part of the delivery system to the feed water tank. Such a unit has will be effective in converting the 3.4.5-trihydroxybenxoic acid to the corresponding 1,2,3-trihydroxybenzene.

An alternative preferred embodiment employs a heat exchanger making use of a heat exchanger that makes use of steam generated by the boiler or circulating within a thermal fluid. Such a unit could be a tubular exchanger or alternatively one with plates that would fit into the delivery system, for instance employing a heat exchanger containing an inlet pipe and an outlet pipe.

Other suitable means for converting the 3,4,5-trihydroxybenzoic acid (i.e. gallic acid) to the corresponding 1,2,3-trihydroxybenzene (i.e. pyrogallol) include the following:
- Use of a plate heat reactor or heat exchanger wherein the 3,4,5-trihydroxybenzoic acid flows through the reactor or heat exchanger and thermal fluid is use the heat the flow of the liquid. The thermal fluid is a fluid which is heated electrically or using steam, for example from the boiler. Alternatively, instead of using the thermal fluid steam from the boiler may be used.
- Use of microwave technology in which the 3,4,5-trihydroxybenzoic acid is heated in line in a tube, pipe work or vessel at least partially constructed of a transparent plastic or glass or other suitable transparent material that will allow the microwave energy to pass through the wall of the tube, pipe work or vessel. The microwave irradiation will induce heating.
- Use of infrared heating, for instance by wrapping a suitable infrared generating wire around a pipe or other vessel through which the 3,4,5-trihydroxybenzoic acid is passed. Infrared radiation is generated by passing an electrical current through the infrared generating wire.
- Heating the 3,4,5-trihydroxybenzoic acid in a vessel or multiple vessels used in parallel in a continuous manner. The heat can be generated using an immersion heater, process heater or other heater suitable for raising the temperature to the desired level.

A particularly preferred aspect of the present invention is where the conversion of the 3,4,5-trihydroxybenzole acid or precursor to the corresponding polyhydric benzene is carried out continuously. In this way a solution containing the 1,2,3-trihydroxybenzene forms a stream which is continuously converted into the corresponding 1,2,3-trihydroxybenzene which is continuously fed into the boiler water circuit. This can be achieved by subjecting the stream containing the solution of the 3,4,5-trihdrobenzoic acid to contact with the agent in the conduit as it is flowed into the boiler water circuit. For instance, a heating source can placed around or within the conduit. Alternatively, the stream containing the solution of 3,4,5-trihydroxybenzoic acid can be flowed into a suitable unit, as mentioned previously, continuously converting the 3,4,5-trihydroxybenzoic acid into the 1,2,3-trihydroxybenzene and then continuously feeding this into the boiler water circuit. The unit may be constructed in such a way as facilitate continuous conversion. Typically, such a unit may contain a double open ended vessel in which the solution of 3,4,5-trihydroxybenzoic acid occurs through one end and the converted composition exits the unit through the other end. Suitably, the unit may consist of a helical pipework which allows contact with the agent, such as a heating source placed in or around the unit, and enables sufficient residence time to ensure conversion of the 3,4,5-trihydroxybenzoic acid to the 1,2,3-trihydroxybenzene.

It is sometimes desirable to employ a pressure relief valve for allowing the release of carbon dioxide which will tend to be formed during the conversion of the 3,4,5-trihydroxybenzoic acid (i.e. gallic acid) to the corresponding 1,2,3-trihydroxybenzene (i.e. pyrogallol). In this way carbon dioxide is removed from the system before it reaches the feed tank or the boiler.

The following examples illustrate the invention without intending to limit the scope.

### Performance Test

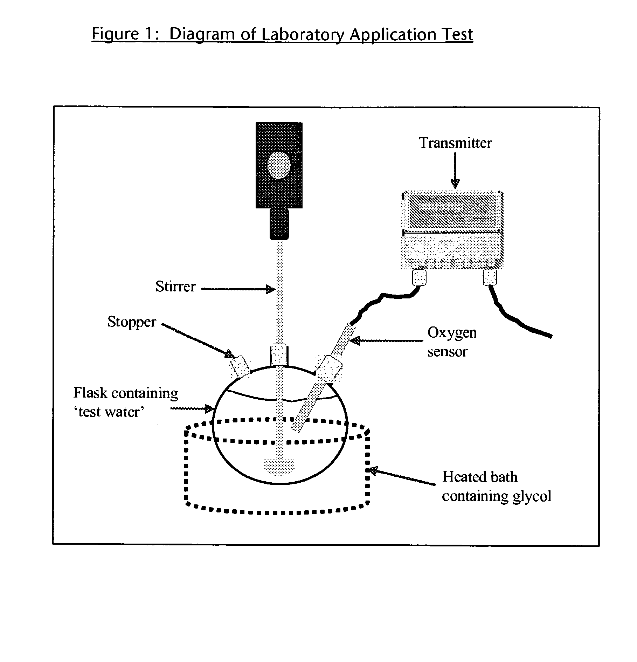

A three necked flask containing 500ml of test water is heated to the test temperature in a glycol bath. A stirrer and oxygen sensor are fitted to the flask as shown in figure 1. The required oxygen scavenger mixture is added to the flask contents and the oxygen level monitored with respect to time. The amount of oxygen remaining at a given time is calculated as the percentage remaining with reference to the initial oxygen level in the mixture.

### Examples

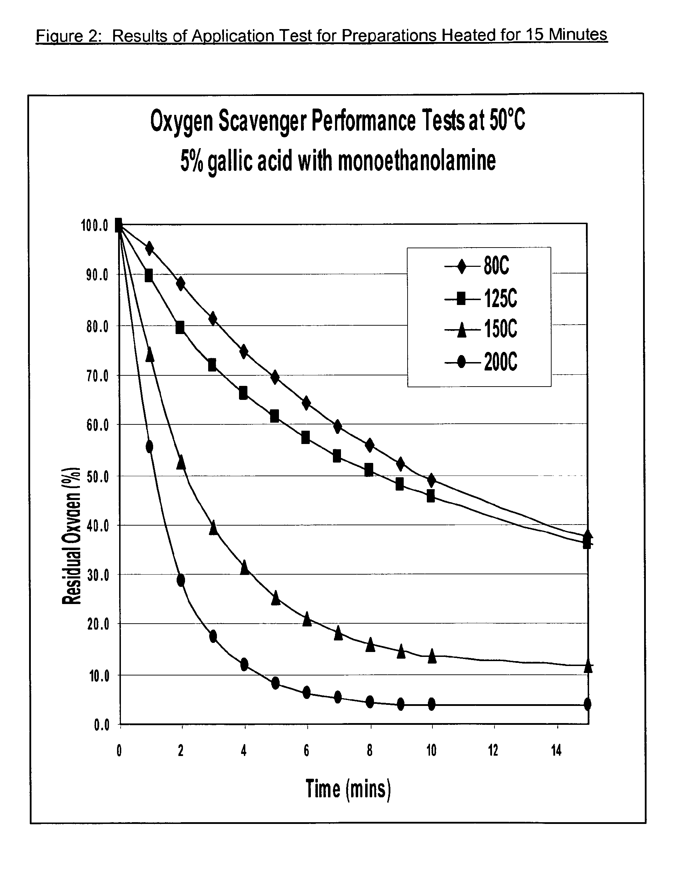

1) 2.5g of gallic acid is weighed into a 50 ml volumetric flask. Approximately 30 ml of deionised is added followed by 1.5ml of monoethanolamine. The mixture is further diluted to the mark with deionised water and mixed. The mixture is heated in a programmable microwave digester (CEM MARS 5) to different temperatures for different lengths of time. The resultant mixture is subjected to the performance test described above and or analysed by high performance liquid chromatography (HPLC) for gallic acid and pyrogallol. Application test results, showing a comparison of preparations heated for 15minutes, are given in figure 2. HPLC data are quoted in Table 1.

**Table 1: HPLC Results**

| **Temperature / °C** | **Heating Time / min** | **Pyrogallol** | **Gallic Acid** |
|---|---|---|---|
| no heating | --- | none detected | 4.93% |
| 80 | 15 | none detected | 4.90% |
| 80 | 30 | none detected | 4.95% |
| 80 | 60 | none detected | 4.70% |
| 125 | 15 | 0.26% | 4.55% |
| 125 | 30 | 0.28% | 4.28% |
| 125 | 60 | 0.42% | 3.61% |
| 150 | 15 | 1.46% | 2.69% |
| 200 | 15 | 3.15% | 270 ppm |

Samples are analysed using the following conditions:

| | |
|---|---|
| Column | :Synergi Polar-RP ex Phenomenex (250mm x 4.6mm 4um ps) |
| Eluent | : A = 0.1 % v/v formic acid in water B = MeOH |
| Gradient | : 0% B for 5mins then to 80% B in 15mins |
| Flow | : 1.2ml/min |
| Detector | : UV @245nm |
| Injection | : 10ul |

2) Samples prepared as in example 1 monoethanolamine is substituted with:
i) cyclohexylamine (2.9 ml), ii) morpholine (2.2 ml), iii) diaminoethylamine (3.4 ml), iv) sodium hydroxide or v) ammonia (1.1ml of 35% solution). Samples are heated to 200°C for 15 minutes.

**Table 2: HPLC Results**

| **Sample** | **Gallic acid** | **Pyrogallol** |
|---|---|---|
| gallic acid / cyclohexylamine | 54 ppm | 3.0 % |
| gallic acid / morpholine | 39 ppm | 3.1 % |
| gallic acid / diethylaminoethanol | 57 ppm | 2.8 % |
| gallic acid / sodium hydroxide | 111 ppm | 3.0 % |
| gallic acid / ammonia | 46 ppm | 2.6 % |

3) Sample prepared as in example 1 but with 7.5 g gallic acid and 4.5 ml monoethanolamine.

**Table 3: HPLC Results**

| **Temperature / °C** | **Heating Time / min** | **Pyrogallol** | **Gallic Acid** |
|---|---|---|---|
| 165 | 15 | 6.40% | 600 ppm |
| 175 | 15 | 8.59% | 455 ppm |

## Claims

1. A method of inhibiting corrosion in a boiler water circuit comprising adding to boiler feedwater containing oxygen an effective amount of a composition comprising 1,2,3-trihydroxybenzene and feeding this into the boiler water circuit, in which the 1,2,3-trihydroxybenzene is generated by subjecting a solution, comprising 3,4,5-trihydroxybenzoic acid and a base to an agent in order to convert at least a portion of the 3,4,5-trihydroxybenzoic acid to said 1,2,3-trihydroxybenzene, wherein the 1,2,3-trihydroxybenzene is formed substantially immediately before it is fed into the boiler water circuit, In which the agent is heat and the amount of heat is sufficient to raise the temperature of the solution of the 3,4,5-trihydroxybenzoic acid to at least 100°C.

2. A method according to claim 1 in which the base is selected from the group consisting of from an amine, ammonia and alkaline metal hydroxide.

3. A method according to claim 1 or claim 2 in which the solution comprising the 3,4,5-trihydroxybenzoic acid is fed to a unit which brings the solution into contact with the agent, and then flowing the resulting composition containing 3,4,5-trihydroxybenzoic acid into the boiler water circuit.

4. A method according to any preceding claim in which the solution containing 3,4,5-trihydroxybenzoic acid is heated using heat sources selected from the group consisting of waste boiler heat, exhaust gases, electrical heating element, waste steam, process steam, microwave heating source and any combinations.

5. A method according to any preceding claim in which the solution comprising 3,4,5-trihydroxybenzoic acid is heated to a temperature above 120°C.

6. A method according to any preceding claim in which the solution containing 3,4,5-trihydroxybenzoic acid and the composition containing 1,2,3-trihydroxybenzene form a stream in which 3,4,5-trihydroxybenzoic acid is continuously converted into 1,2,3-trihydroxybenzene which is continuously fed into the boiler water circuit.

## Patentansprüche

1. Verfahren zur Korrosionsinhibierung in einem Kesselwasserkreislauf, umfassend das Zusetzen zu sauerstoffhaltigem Kesselspeisewasser einer wirksamen Menge einer Zusammensetzung umfassend 1,2,3-Trihydroxybenzol und das Eingeben derselben in den Kesselwasserkreislauf, wobei das 1,2,3-Trihydroxybenzol durch Unterwerfen einer Lösung, die 3,4,5-Trihydroxybenzoesäure und eine Base umfasst, einem Mittel erzeugt wird, um mindestens einen Teil der 3,4,5-Trihydroxybenzoesäure zu dem 1,2,3-Trihydroxybenzol umzuwandeln, wobei das 1,2,3-Trihydroxybenzol im Wesentlichen sofort gebildet wird, bevor es in den Kesselwasserkreislauf eingegeben wird, wobei das Mittel Hitze ist und die Menge an Hitze ausreicht, die Temperatur der Lösung der 3,4,5-Trihydroxybenzoesäure auf mindestens 100 °C zu erhöhen.

2. Verfahren nach Anspruch 1, wobei die Base aus der Gruppe ausgewählt ist bestehend aus einem Amin, Ammoniak und Alkalimetallhydroxid.

3. Verfahren nach Anspruch 1 oder Anspruch 2, wobei die Lösung, die die 3,4,5-Trihydroxybenzoesäure umfasst, zu einer Einheit geführt wird, die die Lösung mit dem Mittel in Kontakt bringt, und dann die resultierende 3,4,5-Trihydroxybenzoesäure enthaltende Zusammensetzung zum Strömen in den Kesselwasserkreislauf gebracht wird.

4. Verfahren nach einem der vorhergehenden Ansprüche, wobei die 3,4,5-Trihydroxybenzoesäure enthaltende Lösung unter Anwendung von Hitzequellen erhitzt wird, die aus der Gruppe ausgewählt sind bestehend aus Kesselabhitze, Abgasen, elektrischem Heizelement, Abdampf, Prozessdampf, Mikrowellenheizquelle und Kombinationen davon.

5. Verfahren nach einem der vorhergehenden Ansprüche, wobei die 3,4,5-Trihydroxybenzoesäure umfassende Lösung auf eine Temperatur über 120 °C erhitzt wird.

6. Verfahren nach einem der vorhergehenden Ansprüche, wobei die 3,4,5-Trihydroxybenzoesäure enthaltende Lösung und die 1,2,3-Trihydroxybenzol enthaltende Zusammensetzung einen Strom bilden, in dem 3,4,5-Trihydroxybenzoesäure kontinuierlich in 1,2,3-Trihydroxybenzol umgewandelt wird, das kontinuierlich in den Kesselwasserkreislauf eingegeben wird.

## Revendications

1. Procédé d'inhibition de la corrosion dans un circuit d'eau de chaudière comprenant l'ajout à une eau d'alimentation de chaudière contenant de l'oxygène d'une quantité efficace d'une composition comprenant du 1,2,3-trihydroxybenzène et l'alimentation de celle-ci dans le circuit d'eau de chaudière, dans lequel le 1,2,3-trihydroxybenzène est généré par soumission d'une solution, comprenant de l'acide 3,4,5-trihydroxybenzoïque et une base à un agent afin de transformer au moins une partie de l'acide 3,4,5-trihydroxybenzoïque en ledit 1,2,3-trihydroxybenzène,
le 1,2,3-trihydroxybenzène étant formé de façon sensiblement immédiate avant d'être alimenté dans le circuit d'eau de chaudière,
dans lequel l'agent est chauffé et la quantité de chaleur est suffisante pour élever la température de la solution de l'acide 3,4,5-trihydroxybenzoïque à au moins 100 °C.

2. Procédé selon la revendication 1 dans lequel la base est choisie dans le groupe constitué d'une amine, de l'ammoniac et d'un hydroxyde de métal alcalin.

3. Procédé selon la revendication 1 ou la revendication 2 dans lequel la solution comprenant l'acide 3,4,5-trihydroxybenzoïque est alimentée dans une unité qui met la solution en contact avec l'agent, et ensuite la composition résultante contenant l'acide 3,4,5-trihydroxybenzoïque est introduite dans le circuit d'eau de chaudière.

4. Procédé selon l'une quelconque des revendications précédentes dans lequel la solution contenant l'acide 3,4,5-trihydroxybenzoïque est chauffée au moyen de sources de chaleur choisies dans le groupe constitué de chaleur dissipée par une chaudière, de gaz d'échappement, d'un élément chauffant électrique, de vapeur d'eau, de vapeur de processus, d'une source de chauffage par micro-ondes et des combinaisons quelconques.

5. Procédé selon l'une quelconque des revendications précédentes dans lequel la solution comprenant l'acide 3,4,5-trihydroxybenzoïque est chauffée à une température supérieure à 120 °C.

6. Procédé selon l'une quelconque des revendications précédentes dans lequel la solution contenant l'acide 3,4,5-trihydroxybenzoïque et la composition contenant le 1,2,3-trihydroxybenzène forment un flux dans lequel l'acide 3,4,5-trihydroxybenzoïque est converti en continu en 1,2,3-trihydroxybenzène qui est alimenté en continu dans le circuit d'eau de chaudière.
